# EUROPÄISCHE PATENTSCHRIFT

(11) **EP 2 989 011 B1**
(45) Veröffentlichungstag und Bekanntmachung des Hinweises auf die Patenterteilung: **24.10.2018**
(21) Anmeldenummer: 14719697.6
(22) Anmeldetag: 17.04.2014
(51) Int. Cl.: B65B 31/00, B65B 47/04, B65B 51/10, F16K 24/00, B65B 25/06, B65B 31/02, B65B 9/04

(54) **WERKZEUGINTEGRIERTES VENTIL FÜR GROB- UND/ODER FEINVAKUUM**
VALVE FOR LOW/HIGH VACUUM INTEGRATED IN TOOL
VANNE POUR BAS/HAUT VIDE INTEGRE DANS L'OUTIL

(30) Priorität: 24.04.2013 DE 102013207418
(43) Veröffentlichungstag der Anmeldung: 02.03.2016
(73) Patentinhaber: GEA Food Solutions Germany GmbH, 35216 Biedenkopf-Wallau (DE)
(72) Erfinder: FRIES, Alexander, 35216 Biedenkopf-Wallau (DE)
(74) Vertreter: Kutzenberger Wolff & Partner
(86) Internationale Anmeldenummer: PCT/EP2014/057876
(87) Internationale Veröffentlichungsnummer: WO 2014/173802

(56) Entgegenhaltungen:
- EP-A1- 0 622 301
- EP-A1- 1 595 794
- EP-A1- 2 384 981
- WO-A1-85/04379
- WO-A1-03/039962
- DE-A1- 1 511 714
- DE-A1-102008 039 200
- DE-A1-102008 039 201

## Beschreibung

Die vorliegende Erfindung betrifft eine Verpackungsmaschine mit den Merkmalen des Anspruchs 1.

Derartige Verpackungsmaschinen bzw. Siegelwerkzeuge sind aus dem Stand der Technik, wie zum Beispiel aus Patentdokument WO85/04379A1 bekannt und werden beispielsweise dazu eingesetzt, um scheibenförmige Lebensmittel, beispielsweise Wurst-, Käse- und/oder Schinkenscheiben oder andere wiege- und/oder zählbare Produkte einzupacken. Diese Verpackungsmaschinen werden als sogenannte Form-Füll-Siegel-Verpackungsmaschinen (FFS-Verpackungsmaschinen), beispielsweise Thermoformer, oder Füll-Siegel-Verpackungsmaschinen (FS-Verpackungsmaschinen), beispielsweise Traysealer, bezeichnet. Bei ersteren wird eine Unterfolienbahn taktweise entlang der Verpackungsmaschine transportiert und zunächst eine oder mehrere Verpackungsmulde(n) pro Format mit einem Stempel oder Unterdruck in die zuvor erwärmte Unterfolienbahn eingeformt. Anschließend wird jede Verpackungsmulde in einer Füllstation mit Scheiben an Verpackungsgut, insbesondere Lebensmittelscheiben, oder anderen Verpackungsgütern, befüllt, nachfolgend mit einer Oberfolie verschlossen und dann vereinzelt. Bei einer FS-Verpackungsmaschine entfällt der Verfahrensschritt des Formens. Die Verpackungsmulden werden als fertige "Trays" zur Verfügung gestellt, befüllt und dann verschlossen. Oftmals weisen die Verpackungen eine von Luft unterschiedliche Atmosphäre auf. Dafür wird in der Verpackungsmulde vorzugsweise zunächst ein Vakuum erzeugt und dann mit einem Gas oder einem Gasgemisch, beispielsweise Kohlendioxid, Stickstoff und/oder Sauerstoff wieder aufgefüllt. Insbesondere das Ziehen von Vakuum, das sogenannte Evakuieren, dauert häufig sehr lange und ist ein limitierender Schritt für die Gesamtleistung der Verpackungsmaschine.

Es war deshalb die Aufgabe der vorliegenden Erfindung eine Verpackungsmaschine zur Verfügung zu stellen, die die Nachteile des Standes der Technik nicht aufweist.

Gelöst wird die Aufgabe mit einer Verpackungsmaschine mit den Merkmalen des Anspruchs 1.

Die vorliegende Erfindung betrifft eine Verpackungsmaschine, insbesondere eine Form-Füll-Siegel-Verpackungsmaschine (FFS-Verpackungsmaschine) oder eine Füll-Siegel-Verpackungsmaschine (FS-Verpackungsmaschine). Bei ersteren wird eine Folienbahn/Unterfolienbahn taktweise entlang der Verpackungsmaschine transportiert und zunächst erwärmt. Anschließend wird in die erwärmte Unterfolienbahn eine oder mehrere Verpackungsmulde(n) in die Unterfolienbahn eingeformt, wobei eine oder mehrere Verpackungsmulden in einem sogenannten Format angeordnet sind, das bei einem Takt hergestellt wird. Dieses Formen der Verpackungsmulde in die Folienbahn kann durch einen Stempel bewirkt oder von einem Stempel unterstützt werden und/oder durch Unterdruck in einer Matrize und/oder durch Überdruck in eine Matrize erfolgen. Bei einer FS-Verpackungsmaschine, beispielsweise einem Traysealer entfällt der Schritt des Formens. Die Verpackungsmulde wird als fertiger "Tray" zur Verfügung gestellt.

Anschließend wird diese Verpackungsmulde in einer Füllstation mit Scheiben an Verpackungsgut, insbesondere Lebensmittelscheiben, oder anderen wiege- und/oder zählbaren Verpackungsgütern, befüllt. Danach wird in einer Siegelstation an die befüllte Verpackungsmulde eine Oberfolie gesiegelt. Die Oberfolie kann auch tiefgezogen sein. Abschließend werden die fertiggestellten Verpackungen mit einem Quer- und/oder Längsschneider oder mit einem Konturenschnitt vereinzelt.

Erfindungsgemäß weist die Siegelstation zumindest ein Ober- und ein Unterwerkzeug auf, die eine Oberfolienbahn an die Verpackungsmulde siegeln. Das Oberwerkzeug enthält eine Oberkammer, das Unterwerkzeug eine Unterkammer und der Raum zwischen Verpackungsmulde und Oberfolienbahn bildet die Produktkammer. Die Produktkammer kann teil des Ober- und/oder des Unterwerkzeugs sein. Weiterhin erfindungsgemäß weist die Siegelstation mindestens ein Ventil auf, das das Unter- und/oder Oberwerkzeug reversibel mit einer Grob- und/oder Feinvakuumquelle verbindet, wobei das Ventil an dem Ober- und/oder an dem Unterwerkzeug angeordnet ist. Vorzugsweise ist jede Kammer mit mindestens einem Ventil verbunden. Insbesondere ist vorzugsweise an jeder Kammer mindestens ein Ventil angeordnet.

Eine Vakuumquelle im Sinne der Erfindung stellt ein Vakuum zur Evakuierung der Verpackungsmulden zur Verfügung. Es kann sich dabei beispielsweise um ein Vakuumvolumen und/oder um eine Vakuumpumpe handeln. Grobvakuum im Sinne der Erfindung ist ein vergleichsweise höherer Absolutdruck als Feinvakuum. Beispielsweise ist Grobvakuum ein Druckbereich ≥ 50 mbar, vorzugsweise 50 - 70 mbar. Feinvakuum ist beispielsweise ein Druckbereich < 50 mbar, vorzugsweise 5 - 10 mbar.

An dem Ober- und/oder Unterwerkzeug angeordnet oder an der Ober-, Produkt- oder Unterkammer angeordnet im Sinne der Erfindung bedeutet, dass zwischen dem Ventil und dem Ober- und/oder Unterwerkzeug keine oder wenn überhaupt nur ein sehr kurzes Leitungsstück vorgesehen ist. Ein derartiges Leitungsstück ist beispielsweise eine rohr- oder schlauchförmige Leitung, aber auch eine beispielsweise im Werkstück und/oder in dem Ventil vorhandene Ausnehmung, insbesondere Bohrung. Vorzugsweise wird bei einem Werkzeugwechsel das Ventil zusammen mit dem Ober- und/oder Unterwerkzeug in die Verpackungsmaschine ein- bzw. ausgebaut. Vorzugsweise beträgt das Leitungsvolumen bei der Ober- und Unterkammer zwischen dem Ventil und der jeweiligen Kammer pro Ventil weniger als 100 ml, vorzugsweise weniger als 50 ml, besonders bevorzugt weniger als 30 ml und noch mehr bevorzugt weniger als 20 ml. Bei der Produktkammer beträgt das Volumen der Leitung vorzugsweise weniger als 2, vorzugsweise weniger als 1,5, und besonders bevorzugt weniger als 1 und ganz besonders bevorzugt weniger als 0,75 jeweils gemessen in ml Leitungsvolumen pro mm Vorzug und pro Ventil, wobei der Vorzug die Länge des Vorzugs der Folienunterbahn bei einem Takt ist.

Durch die äußerst kurze Entfernung zwischen dem Ventil und dem Ober- und/oder Unterwerkzeug bzw. Ober-, Produkt- oder Unterkammer wird das Volumen der Zuleitung, das zur Erhöhung der Strömungsgeschwindigkeit groß sein muss, eingespart. Neben dem Vorteil der Volumenreduzierung ist ein weiterer Vorteil die Leitwertoptimierung im Abflussweg der Luft. Denn bis zu dem Ober- und/oder Unterwerkzeug können die Vakuumschläuche entweder gerade oder in großen Radien verlegt werden. Des Weiteren muss jetzt nur noch ein Ventil durchflossen werden statt zwei. Ein möglicherweise vorhandener Vakuumverteiler, der eine Verteilung von einer Leitung auf mehrere Ventile erlaubt, ist durchflussoptimiert.

Üblicherweise ist zwischen dem Ober- und dem Unterwerkzeug bzw. zwischen Ober- und Unterkammer noch eine Produktkammer vorgesehen, die bei einem Gasaustausch ebenfalls evakuiert wird. Dieser Produktkammer ist vorzugsweise mindestens ein Ventil zugeordnet, wobei die Ausführungen zu dem Ventil betreffend das Ober- und das Unterwerkzeug für das Ventil der Produktkammer gleichermaßen gilt.

Vorzugsweise werden in der Oberkammer, in dem Unterkammer und/oder in der Produktkammer derselbe Unterdruck erzeugt.

Ein weiterer bevorzugter oder erfindungsgemäßer Gegenstand der vorliegenden Erfindung ist eine Verpackungsmaschine, bei der das Ventil einen Ventilsitz und ein bewegliches Element aufweist, das dichtend mit dem Ventilsitz zusammenwirkt und bei dem der Ventilsitz Teil des Unter- oder Oberwerkzeugs ist.

Die zu diesem Gegenstand der vorliegenden Erfindung gemachte Offenbarung gilt für die anderen Gegenstände der vorliegenden Erfindung gleichermaßen und umgekehrt.

Diese bevorzugte oder erfindungsgemäße Ausführungsform der vorliegenden Erfindung hat den Vorteil, dass zwischen dem Ventil und dem Ober-, Unterwerkzeug bzw. der Ober-, Produkt- und/oder Unterkammer ein minimaler oder gar kein Abstand herrscht. Das Ventil ist Teil des Werkzeugs- bzw. der Produktkammer und wird bei einem Werkzeugwechsel gemeinsam mit diesem/dieser ausgetauscht. Das Ventil ist optimal auf das jeweilige Werkzeug abgestimmt. Vorzugsweise weisen das Ober- und das Unterwerkzeug bzw. die Ober-, Produkt- und/oder Unterkammer jeweils ein Ventil für Grob- und Feinvakuum auf. Nachdem ein neues Werkzeug in die erfindungsgemäße Verpackungsmaschine eingebaut worden ist, müssen die Ventile nur mit der jeweiligen Vakuumquelle verbunden werden. Die Leitung zwischen dem Ventil und der Vakuumquelle braucht in keiner Weise volumenoptimiert zu sein, sondern kann ausschließlich bezüglich Strömungswiderstand optimiert werden.

Vorzugsweise ist der Ventilsitz einstückig mit dem Unter- und/oder Oberwerkzeug bzw. der Ober-, Produkt- und/oder Unterkammer vorgesehen. Der Ventilsitz wird dann beispielsweise spanabhebend in das jeweilige Werkzeug bzw. die Produktkammer eingearbeitet.

Für den Fall, dass Ventile für Grob- und Feinvakuum vorgesehen werden, können diese unterschiedlich ausgeführt werden. Beispielsweise kann das Ventil für das Grobvakuum lediglich als Klappe ohne Antrieb vorgesehen werden.

Noch ein weiterer bevorzugter oder erfindungsgemäßer Gegenstand der vorliegenden Erfindung ist eine Verpackungsmaschine, bei der im Bereich des Unter- und/oder Oberwerkzeugs bzw. der Ober-, Produkt- und/oder Unterkammer jeweils zwei Ventile vorgesehen sind, wobei ein Ventil nur mit Feinvakuum und das andere Ventil nur mit Grobvakuum beaufschlagt ist.

Die zu diesem Gegenstand der vorliegenden Erfindung gemachte Offenbarung gilt für die anderen Gegenstände der vorliegenden Erfindung gleichermaßen und umgekehrt.

Erfindungsgemäß weist jedes Werkzeug und/oder jede Kammer zwei Ventile auf, wobei das eine Ventil nur mit Feinvakuum und das andere Ventil nur mit Grobvakuum beaufschlagt wird. Dadurch können wiederum die Volumina, die bei einem Umschalten von Grob- auf Feinvakuum neben dem jeweiligen Werkzeug bzw. der jeweiligen Kammer evakuiert werden müssen, reduziert werden, wodurch die Zeit, die für das Evakuieren benötigt wird, reduziert werden kann und vergleichsweise geringeres Saugvermögen, also geringe Pumpenleistung zur Aufrechterhaltung des Vakuums benötigt wird. "Im Bereich" im Sinne der Erfindung bedeutet, dass das Leitungsvolumen bei der Ober- und Unterkammer zwischen dem Ventil und der jeweiligen Kammer pro Ventil vorzugsweise weniger als 100 ml, vorzugsweise weniger als 50 ml, besonders bevorzugt weniger als 30 ml und noch mehr bevorzugt weniger als 20 ml beträgt. Bei der Produktkammer beträgt das Volumen der Leitung vorzugsweise weniger als 2, vorzugsweise weniger als 1,5, und besonders bevorzugt weniger als 1 und ganz besonders bevorzugt weniger als 0,75 jeweils gemessen in ml Leitungsvolumen pro mm Vorzug und pro Ventil, wobei der Vorzug die Länge des Vorzugs der Folienunterbahn bei einem Takt ist.

Ein weiterer Gegenstand der vorliegenden Erfindung ist ein Siegelwerkzeug einer Verpackungsmaschine, dadurch gekennzeichnet, dass es mindestens ein, vorzugsweise zwei Ventile aufweist.

Die zu diesem Gegenstand der vorliegenden Erfindung gemachte Offenbarung gilt für die anderen Gegenstände der vorliegenden Erfindung gleichermaßen und umgekehrt.

Erfindungsgemäß weist jedes Werkzeug und/oder jede Kammer ein Ventil auf, das, insbesondere fest mit dem jeweiligen Werkzeug verbunden ist. Bei einem Werkzeugwechsel wird das jeweilige Ventil folglich gemeinsam mit dem Werkzeug oder der Produktkammer ausgetauscht.

Vorzugsweise weist jedes Ventil einen Ventilsitz und ein bewegliches Element, beispielsweise einen Stößel, auf, das dichtend mit dem Ventilsitz zusammenwirkt, wobei der Ventilsitz Teil des Unter- oder Oberwerkzeugs bzw. der Ober-, Produkt- oder Unterkammer ist. Vorzugsweise ist der Ventilsitz einstückig mit dem Unter- und/oder Oberwerkzeug vorgesehen.

Noch ein Gegenstand der vorliegenden Erfindung ist ein Verfahren zum Evakuieren einer Kammer eines Siegelwerkzeugs, bei dem an einen ersten Ventilsatz, der aus mindestens aus zwei Ventilen besteht, zunächst ein Grobvakuum und dann an einen anderen Ventilsatz, der aus mindestens zwei Ventilen besteht ein Feinvakuum angelegt wird.

Die zu diesem Gegenstand der vorliegenden Erfindung gemachte Offenbarung gilt für die anderen Gegenstände der vorliegenden Erfindung gleichermaßen und umgekehrt.

Dadurch, dass an einen Ventilsatz immer nur ein Vakuum, d.h. Grob- oder Feinvakuum, angelegt wird, wird wesentlich weniger Zeit für die Evakuierung der Kammer benötigt.

Ein weiterer Gegenstand der vorliegenden Erfindung ist ein Verfahren zum Wechsel eines Werkzeuges, bei dem gemeinsam mit dem Werkzeug auch die Ventile ausgetauscht werden.

Die zu diesem Gegenstand der vorliegenden Erfindung gemachte Offenbarung gilt für die anderen Gegenstände der vorliegenden Erfindung gleichermaßen und umgekehrt.

Dieses erfindungsgemäße Verfahren hat den Vorteil, dass ein speziell für das jeweilige Werkzeug vorgesehene Verntil gemeinsam mit dem Werkzeug eingebaut wird.

Im Folgenden werden die Erfindungen anhand der Figuren 1 bis 3 erläutert. Diese Erläuterungen sind lediglich beispielhaft und schränken den allgemeinen Erfindungsgedanken nicht ein. Die Erläuterungen gelten für alle Gegenstände der vorliegenden Erfindung gleichermaßen.
Figur 1 zeigt die erfindungsgemäße Verpackungsmaschine.
Figur 2 zeigt eine Siegelstation gemäß dem Stand der Technik.
Figur 3 zeigt eine Siegelstation der erfindungsgemäßen Verpackungsmaschine.

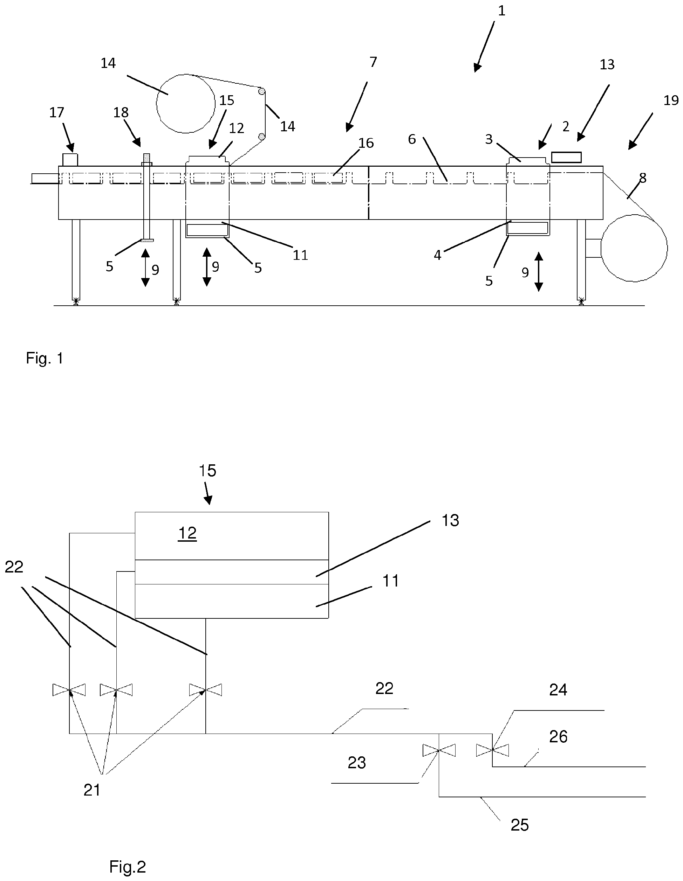

Figur 1 zeigt die erfindungsgemäße Verpackungsmaschine 1, die hier eine Tiefziehstation 2, eine Füllstation 7 sowie eine Siegelstation 19 aufweist, d.h. eine FFS-Verpackungsmaschine ist. Eine Unterfolienbahn 8, hier eine Kunststofffolienbahn 8, wird von einer Vorratsrolle abgezogen und taktweise entlang der erfindungsgemäßen Verpackungsmaschine von rechts nach links transportiert. Bei einem Takt wird die Unterfolienbahn 8 um eine Formatlänge weitertransportiert. Dafür weist die Verpackungsmaschine zwei Transportmittel (nicht dargestellt), in dem vorliegenden Fall jeweils zwei Endlosketten, auf, die rechts und links von der Unterfolienbahn 8 angeordnet sind. Sowohl am Anfang als auch am Ende der Verpackungsmaschine ist für jede Kette jeweils mindestens ein Zahnrad vorgesehen, um das die jeweilige Kette umgelenkt wird. Mindestens eines dieser Zahnräder ist angetrieben. Die Zahnräder im Eingangsbereich und/oder im Ausgangsbereich können miteinander, vorzugsweise durch eine starre Welle, verbunden sein. Jedes Transportmittel weist eine Vielzahl von Klemmmitteln auf, die die Unterfolienbahn 8 im Einlaufbereich 24 klemmend ergreifen und die Bewegung des Transportmittels auf die Unterfolienbahn 8 übertragen. Im Auslaufbereich der Verpackungsmaschine wird die klemmende Verbindung zwischen dem Transportmittel und der Unterfolienbahn 8 wieder gelöst. Zunächst wird die Unterfolienbahn 8 erwärmt, insbesondere auf seine Glastemperatur erwärmt. Dies erfolgt vorzugsweise während die Folienbahn stillsteht. In der nachfolgenden Tiefziehstation 2, die über ein Oberwerkzeug 3 und ein Unterwerkzeug 4 verfügt, das die Form (Matrize) der herzustellenden Verpackungsmulde aufweist, werden die Verpackungsmulden 6 in die Folienbahn 8 eingeformt. Das Unterwerkzeug 4 ist auf einem Hubtisch 5 angeordnet, der, wie durch den Doppelpfeil symbolisiert wird, vertikal verstellbar ist. Vor jedem Folienvorschub wird das Unterwerkzeug 4 abgesenkt und danach wieder angehoben. Vorzugsweise wird das Formen der Unterbahn durch einen Stempel besonders bevorzugt pro Verpackungsmulde zumindest unterstützt, der jeweils an dem Oberwerkzeug 3 vorgesehen ist und durch einen Antrieb von einer angehobenen Parkposition in eine formende Position abgesenkt und vor dem Weitertransport der Folienbahn 8 wieder angehoben wird. Im weiteren Verlauf der Verpackungsmaschine werden die Verpackungsmulden dann in der Füllstation 7 mit dem scheibenförmigen Verpackungsgut 16 befüllt. In der sich daran anschließenden Siegelstation 15, die ebenfalls aus einem Oberwerkzeug mit einer Oberkammer 12 und einem vertikal verstellbaren Unterwerkzeug mit einer Unterkammer 11 besteht, wird eine Oberfolie 14 stoffschlüssig, vorzugsweise durch Siegeln, an der Unterfolienbahn 8 befestigt. Dafür weist die Siegelstation in der Regel einen beheizten Siegelrahmen auf. Auch in der Siegelstation werden das Oberwerkzeug und/oder das Unterwerkzeug vor und nach jedem Folientransport abgesenkt bzw. angehoben. Auch die Oberfolie 14 kann in Transportmitteln geführt sein bzw. von Transportketten transportiert werden, wobei sich diese Transportmittel dann nur von der Siegelstation und ggf. stromabwärts erstrecken. Des Weiteren kann auch die Oberfolie tiefgezogen sein und vor dem Tiefziehen erwärmt werden. Ansonsten gelten die Ausführungen, die zu den Transportmitteln der Unterfolie gemacht wurden. Im weiteren Verlauf der Verpackungsmaschine werden die fertiggestellten Verpackungen vereinzelt, was in dem vorliegenden Fall mit dem Querschneider 18 und dem Längsschneider 17 erfolgt. Der Querschneider 18 ist in dem vorliegenden Fall ebenfalls mit einer Hubeinrichtung 9 anhebbar bzw. absenkbar.

Für den Fall, dass die erfindungsgemäße Verpackungsmaschine nur eine FS-Verpackungsmaschine, d.h. beispielsweise ein Traysealer ist, weist sie nur eine Befüll- und eine Siegelstation auf. Das Ausschneiden der fertiggestellten Verpackung aus der Oberfolie erfolgt in diesem Fall vorzugsweise in der Siegelstation als Konturenschnitt.

Figur 2 zeigt eine Siegelstation 15 gemäß dem Stand der Technik. Diese weist ein Oberwerkzeug 12, ein Unterwerkzeug 11 und in dem vorliegenden Fall eine Produktkammer 13 auf. Mit dem Ober- und Unterwerkzeug wird eine Oberfolie an eine Verpackungsmulde unter Einfluss von Temperatur und Druck gesiegelt. Vor dem Siegeln erfolgt in der Verpackungsmulde ein Gasaustausch. Dafür muss das vorhandene Luftvolumen in der Verpackungsmulde zunächst mittels Vakuum reduziert werden. In dem vorliegenden Fall wird zunächst ein Grobvakuum und anschließend ein Feinvakuum angelegt. Dementsprechend weist die Siegelstation eine Grobvakuumquelle 26, beispielweise einen Vakuumbehälter oder eine Vakuumpumpe und eine Feinvakuumquelle 25, beispielsweise einen Vakuumbehälter oder eine Vakuumpumpe auf. Stromabwärts von den Quellen 25, 26 ist ein Feinvakuumventil 23 bzw. ein Grobvakuumventil 24 angeordnet, die wiederum stromabwärts an eine Leitung 22 angeschlossen sind, die die Ventile 23, 24 mit dem jeweiligen Werkzeug 11 -13 verbindet. Für das Ziehen des Grobvakuums werden die Ventile 24 und 21 geöffnet. Das Ventil 23 ist geschlossen. Für das Umschalten von Grob- auf Feinvakuum wird das Ventil 24 wieder geschlossen und das Ventil 23 geöffnet. Die Ausführung gemäß dem Stand der Technik hat den Nachteil, dass erst das gesamte Volumen der Leitung 22 leergesaugt werden muss, bevor der Druck in den Werkzeugen 11 - 13 auf den Druck des Feinvakuums reduziert werden kann.

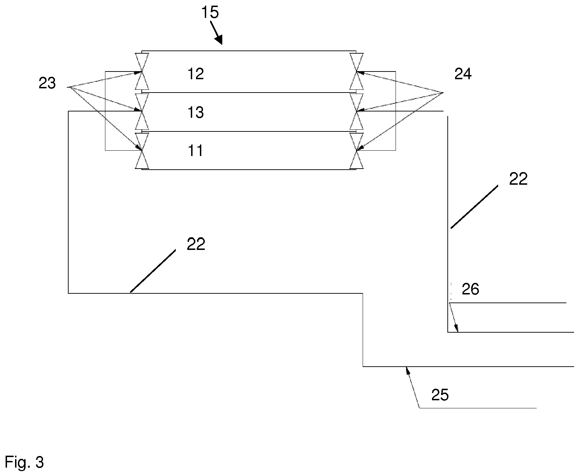

Figur 3 zeigt die erfindungsgemäße Lösung. Mindestens ein, hier alle Werkzeuge 11 - 13 weisen zwei Ventile 23, 24 auf, die vorzugsweise in das jeweilige Werkzeug integriert sind. Vorzugsweise ist der Ventilsitz der Ventile 23, 24 in das jeweilige Werkzeug eingearbeitet. Es existiert keine Leitung zwischen den Ventilen 23, 24 und dem Werkzeug 11 - 13. Die Ventile 23 sind über die Leitung 22 direkt mit der Feinvakuumquelle verbunden. Die Ventile 24 sind über eine Leitung 22 direkt mit der Grobvakuumquelle verbunden. Um das Grobvakuum in den Werkzeugen 11 - 13 einzustellen, werden die Ventile 24 geöffnet. Beim Umschalten von Grob- auf Feinvakuum werden die Ventile 24 geschlossen und die Ventile 23 geöffnet. Dadurch, dass die Ventile Teil des jeweiligen Werkzeugs sind, liegt das jeweilige Vakuum unmittelbar nach dem Öffnen der Ventile in dem jeweiligen Werkzeug 11 - 13 an. Die Leitung 22 muss nicht erst leergesaugt werden und kann strömungsoptimiert ausgelegt werden. Bei einem Werkzeugwechsel, werden die Ventile 23, 24 mit dem jeweiligen Werkzeug ausgetauscht.

### Bezugszeichenliste:

- 1: Verpackungsmaschine
- 2: Formstation, Tiefziehstation
- 3: Oberwerkzeug der Tiefziehstation
- 4: Unterwerkzeug der Tiefziehstation
- 5: Hubtisch, Träger eines Werkzeugs der Siegel-, Tiefziehstation und/oder der Schneideinrichtung
- 6: Verpackungsmulde
- 7: Füllstation
- 8: Folienbahn, Unterfolienbahn
- 9: Hubeinrichtung
- 10: Antrieb
- 11: Unterkammer der Siegelstation
- 12: Oberkammer der Siegelstation
- 13: Produktkammer
- 14: Oberfolienbahn, Deckelfolie
- 15: Siegelstation
- 16: Verpackungsgut
- 17: Längsschneider
- 18: Querschneider
- 19: Einlaufbereich
- 20: Tiefziehstempel
- 21: Vakuumventil
- 22: Leitung
- 23: Ventil Feinvakuum
- 24: Ventil Grobvakuum
- 25: Feinvakuumquelle
- 26: Grobvakuumquelle

## Patentansprüche

1. Verpackungsmaschine (1) mit:
- einer Füllstation, in der die Verpackungsmulden (6) mit einem Verpackungsgut (16) befüllt werden,
- einer Siegelstation (15) zumindest mit einem Oberwerkzeug (3) mit einer Oberkammer (11) und einem Unterwerkzeug (4) mit einer Unterkammer (12), die eine Oberfolienbahn (14) an die Verpackungsmulde siegeln, wobei die Siegelstation mindestens ein Ventil (23, 24) aufweist, das Unter- und/oder Oberwerkzeug (4, 3) reversibel mit einer Grob- und/oder Feinvakuumquelle (25, 26) verbindet,
**dadurch gekennzeichnet, dass** (4, 3) im Bereich des Unter- und/oder Oberwerkzeugs (4, 3) und/oder im Bereich des Ober- und/oder Unterkammer (11, 12) und/oder einer Produktkammer (13) jeweils zwei Ventile (24, 25) vorgesehen sind, wobei ein Ventil (24) nur mit Feinvakuum und das andere Ventil (25) nur mit Grobvakuum beaufschlagt ist und, dass jedes Ventil (23, 24) an dem Ober- oder Unterwerkzeug (4, 3) angeordnet ist.

2. Verpackungsmaschine nach Anspruch 1, **dadurch gekennzeichnet, dass** jedes Ventil einen Ventilsitz und ein bewegliches Element aufweist, das dichtend mit dem Ventilsitz zusammenwirkt und dass der Ventilsitz Teil des Unter- oder Oberwerkzeugs ist.

3. Verpackungsmaschine nach Anspruch 2, **dadurch gekennzeichnet, dass** der Ventilsitz einstückig mit dem Unter- und/oder Oberwerkzeug vorgesehen ist.

4. Verpackungsmaschine nach einem der Ansprüche 1 - 3, **dadurch gekennzeichnet, dass** das Grobvakuumventil (24) als Rückschlagklappe vorgesehen ist.

## Claims

1. Packaging machine (1) having:
- a filling station, in which the packaging depressions (6) are filled with a material (16) to be packaged,
- a sealing station (15) at least having an upper tool (3) with an upper chamber (11) and a lower tool (4) with a lower chamber (12) which seal an upper film web (14) to the packaging depression, wherein the sealing station has at least one valve (23, 24) which connects lower tool and/or upper tool (4, 3) reversibly to a rough and/or fine vacuum source (25, 26),
**characterized in that** (4, 3) in the region of the lower and/or upper tool (4, 3) and/or in the region of the upper and/or lower chamber (11, 12) and/or a product chamber (13), in each case two valves (24, 25) are provided, wherein one valve (24) has only fine vacuum applied thereto and the other valve (25) has only rough vacuum applied thereto, and **in that** each valve (23, 24) is arranged on the upper or lower tool (3, 4).

2. Packaging machine according to Claim 1, **characterized in that** each valve has a valve seat and a movable element which interacts in a sealing manner with the valve seat, and **in that** the valve seat is part of the lower or upper tool.

3. Packaging machine according to Claim 2, **characterized in that** the valve seat is provided in one piece with the lower and/or upper tool.

4. Packaging machine according to one of Claims 1 to 3, **characterized in that** the rough vacuum valve (24) is provided as a non-return flap.

## Revendications

1. Machine d'emballage (1), comprenant :
- un poste de remplissage dans lequel les cavités d'emballage (6) sont remplies avec un matériau à emballer (16),
- un poste de scellement (15) comprenant au moins un outil supérieur (3) avec une chambre supérieure (11) et un outil inférieur (4) avec une chambre inférieure (12), qui scellent une bande de feuille supérieure (14) au niveau de la cavité d'emballage, le poste de scellement présentant au moins une soupape (23, 24) qui relie de manière réversible l'outil inférieur et/ou l'outil supérieur (4, 3) avec une source de vide grossier et/ou fin (25, 26),
**caractérisée en ce que** (4, 3)
dans la région de l'outil inférieur et/ou de l'outil supérieur (4, 3) et/ou dans la région de la chambre supérieure et/ou de la chambre inférieure (11, 12) et/ou d'une chambre de produit (13) sont à chaque fois prévues deux soupapes (24, 25), une soupape (24) étant sollicitée seulement avec du vide fin et l'autre soupape (25) étant seulement sollicitée avec du vide grossier et **en ce que** chaque soupape (23, 24) est disposée au niveau de l'outil supérieur ou de l'outil inférieur (4, 3) .

2. Machine d'emballage selon la revendication 1, **caractérisée en ce que** chaque soupape présente un siège de soupape et un élément mobile qui coopère avec le siège de soupape de manière étanche et **en ce que** le siège de soupape fait partie de l'outil inférieur ou de l'outil supérieur.

3. Machine d'emballage selon la revendication 2, **caractérisée en ce que** le siège de soupape est prévu d'une seule pièce avec l'outil inférieur et/ou l'outil supérieur.

4. Machine d'emballage selon l'une quelconque des revendications 1 à 3, **caractérisée en ce que** la soupape à vide grossier (24) est prévue sous forme de clapet antiretour.
